Europäisches Patentamt

European Patent Office

Office européen des brevets

(19)

(11) Veröffentlichungsnummer: **0 216 230**
**A2**

(12) **EUROPÄISCHE PATENTANMELDUNG**

(21) Anmeldenummer: 86112348.7

(22) Anmeldetag: 06.09.86

(51) Int. Cl.⁴: **B44C 5/04** , B32B 27/10

(30) Priorität: 17.09.85 DE 3533136

(43) Veröffentlichungstag der Anmeldung:
01.04.87 Patentblatt 87/14

(84) Benannte Vertragsstaaten:
DE GB IT NL

(71) Anmelder: HOECHST AKTIENGESELLSCHAFT
Postfach 80 03 20
D-6230 Frankfurt am Main 80(DE)

(72) Erfinder: Ernst, Gottlieb
Habichtweg 9
D-6200 Wiesbaden-Nordenstadt(DE)
Erfinder: Schad, Alfred
Hauberisserstrasse 21
D-6200 Wiesbaden(DE)

(54) Trennfolie zur Herstellung oberflächlich strukturierter, dekorativer Schichtstoffplatten.

(57) Es wird eine mehrschichtige Trennfolie zur Herstellung der Oberflächenstrukturierung von dekorativen Schichtstoffplatten beschrieben, deren kennzeichnenden Merkmale darin bestehen, daß sie eine Verbundkombination darstellt, umfassend eine erste Schicht aus papier und wenigstens eine zweite Schicht aus thermoplastischem Kunststoff, die einseitig ganzflächig mit der ersten Schicht festhaftend verbunden ist.

EP 0 216 230 A2

## Trennfolie zur Herstellung oberflächlich strukturierter, dekorativer Schichtstoffplatten

Die Erfindung betrifft eine mehrschichtige Trennfolie zur Herstellung der Oberflächenstrukturierung von dekorativen Schichtstoffplatten.

Zur Herstellung von dekorativen Schichtstoffplatten der gattungsgemäßen Art wird im allgemeinen zunächst Natronkraftpapier mit einem niedermolekularen Duroplastharz imprägniert und bei 120 bis 160°C getrocknet, wobei das Harz teilweise aushärtet. Eine Anzahl dieser vorbehandelten Papiere wird übereinandergestapelt, sie bilden den Kern der späteren Schichtstoffplatte. Auf eine oder auf beide äußeren Papierlagen des Stapels aus den vorbehandelten Papieren wird eine dekorative Papierschicht und gegebenenfalls eine abdeckende Papierschicht aufgelegt, die gewöhnlich ebenfalls in entsprechender Weise mit einem Duroplastharz vorbehandelt sind. Der Stapel aus den übereinanderliegenden Schichten wird bei einer Temperatur von 120 bis 180°C unter einem Druck von mindestens 70 bar zu einer planen Platte verpreßt. Während dieses Vorgangs fließen die Harze und werden gehärtet, wodurch die einzelnen Lagen des Kerns und der Oberflächenschichten ein in sich geschlossenes, nicht schmelzbares, starres vernetztes Produkt bilden.

Die dekorative Oberflächenstrukturierung der Schichtstoffplatte entsteht durch Abziehen der dekorativen Papierschicht von der abdeckenden Papierschicht. Als abdeckende Papierschicht werden wegen der guten Trennwirkung normalerweise mit Silikonharz beschichtete Papiere eingesetzt. Diese haben jedoch den Nachteil, daß sie verhältnismäßig teuer sind.

Man ist deshalb dazu übergegangen, statt der mit Silikonharz beschichteten Papiere als Trennfolie eine Kunststoffolie einzusetzen. Die DE-OS 29 07 707 beschreibt ein Trennmedium aus einer Papierschicht und/oder einer Kunststoffolie als Strukturgeber bei der Herstellung dekorativer Schichtstoffplatten, auch Metallfolien oder Metallplatten können hierzu verwendet werden. Als Nachteil hat sich hierbei erwiesen, daß das insbesondere faltenfreie Einlegen der Kunststofftrennfolie vor dem Verpressen der übereinanderliegenden harzgetränkten Papierschichten ein Vorgang ist, der höchste Präzision erfordert, denn jede noch so geringe Unebenheit bedingt durch Faltenbildung oder Einschlüsse bildet sich auf der Schichtstoffplattenoberfläche ab und führt sofort zu Ausschußware. Das Einlegen der Kunststofftrennfolie erfordert deshalb bei der Herstellung der Schichtstoffplatten einen erheblichen zeitlichen und personellen Aufwand, was als großer Nachteil im Hinblick auf die Wirtschaftlichkeit der Herstellung der Schichtstoffplatten anzusehen ist.

Aufgabe der vorliegenden Erfindung war es deshalb, eine Trennfolie zur Herstellung dekorativer Schichtstoffplatten zu entwickeln, die sich ohne die Gefahr von Unebenheiten durch Faltenbildung oder Einschlüsse schnell, insbesondere maschinell, auflegen läßt und die darüber hinaus auch noch preiswert ist.

Gelöst wird diese Aufgabe durch eine Trennfolie der eingangs genannten Gattung, deren kennzeichnendes Merkmal darin zu sehen ist, daß sie eine Verbundkombination darstellt, umfassend eine erste Schicht aus Papier und wenigstens eine zweite Schicht aus thermoplastischem Kunststoff, die einseitig ganzflächig mit der ersten Schicht festhaftend verbunden ist.

In einer weiteren Ausgestaltung der Erfindung besitzt die erfindungsgemäße Trennfolie dreischichtigen Aufbau, wobei auf beiden Seiten der ersten Schicht aus Papier Schichten aus thermoplastischem Kunststoff vorgesehen sind, die ganzflächig mit der ersten Schicht festhaftend verbunden sind. In diesem Fall weist die erfindungsgemäße Trennfolie symmetrischen Aufbau auf, wobei die Dicke der Papierschicht größer ist als die Dicke der Schichten aus thermoplastischem Kunststoff, bevorzugt größer als 50% der Gesamtdicke der Trennfolie.

Für die erfindungsgemäße Trennfolie wird als Papierschicht bevorzugt ein Papier mit einer vergleichsweise hohen Steifigkeit eingesetzt. Ein geeignetes Papier hat beispielsweise ein Flächengewicht im Bereich von 40 bis 120, bevorzugt von 60 bis 100 g/m² und eine Dicke von wenigstens 40 μ. Um die dekorative Oberflächenstrukturierung der Schichtstoffplatte auszubilden, weist die Papierschicht bevorzugt auf wenigstens einer ihrer Oberflächen, im Falle des dreischichtigen Aufbaus bevorzugt auf beiden Oberflächen, Profilierungen auf. In diesem Fall überzieht die zweite Schicht bzw. die Schichten aus thermoplastischem Kunststoff die erste Schicht aus Papier auf der Seite/den Seiten mit den Profilierungen ganzflächig. Bei dem Aushärtungsvorgang überträgt sich die Profilierung der Oberfläche der Papierschicht auf die Oberfläche der die dekorative Schichtstoffplatte bildenden Harzschicht.

Als thermoplastische Kunststoffe können prinzipiell alle thermoplastischen Kunststoffe eingesetzt werden, die gegenüber der Zusammensetzung der die Oberfläche der dekorativen Schichtstoffplatte bildenden Harzmasse befriedigende Trennwirkung besitzen. Bevorzugte thermoplastische Kunststoffe sind im Rahmen der vorliegenden Erfindung Polyolefine und Polyester.

Als Polyolefine sollen insbesondere Propylenhomopolymere eingesetzt werden oder Copolymere, die zum überwiegenden Anteil aus Propyleneinheiten zusammengesetzt sind. Solche Polymeren besitzen üblicherweise einen Schmelzpunkt von mindestens 140°C, bevorzugt von > 150°C. Isotaktisches Polypropylen mit einem n-heptanlöslichen Anteil von weniger als 15 Gew.-%, Copolymere von Ethylen und Propylen mit einem Ethylengehalt von weniger als 10 Gew.-% und Copolymere von Propylen mit anderen Alphaolefinen mit 4 bis 8 Kohlenstoffatomen und mit einem Gehalt dieser Alphaolefine von weniger als 10 Gew.-% stellen typische Beispiele für die bevorzugten thermoplastischen Polyolefine dar.

Die bevorzugten thermoplastischen Polyolefine haben zweckmäßigerweise einen Schmelzflußindex im Bereich von 0,5 g/10 min bis 8 g/10 min bei 230°C und 2,16 kp Belastung (DIN 53 735), insbesondere von 1,5 g/10 min bis 4 g/10 min.

Unter Polyesterrohstoffen sind Polyester-Homo-und -Copolymere, Gemische verschiedener Polyester sowie Abmischungen und Blends von Polyestern mit anderen Polymeren zu verstehen.

Die Herstellung der Polyester kann sowohl nach dem Umesterungsverfahren mit den bekannten Katalysatoren wie z.B. Zn-, Ca-, Mn-, Li-, Ge-Salzen oder nach dem Direktveresterungsverfahren erfolgen. Beispiele für Polyester sind Polyethylenterephthalat, Polytetramethylenterephthalat, Poly-1,4-cyclohexylendimethyl-terephthalat, Polyethylen-2,6-Naphthalat.

Die Copolyester können als Bausteine Adipinsäure, Sebacinsäure, Phthalsäure, Isophthalsäure, Sulfoisophthalsäure u.a. enthalten. Die nach dem Umesterungsverfahren hergestellten Polyester können sogenannte interne Partikel, Katalysatorrückstandsteilchen enthalten.

Beispiele für Polymere, die in den Polyester eingearbeitet werden können, sind Polyolefin-Homo-oder-Copolymere wie Polypropylen, Poly-4-methylpenten, Ethylen-Vinylacetat-Copolymere, die ihrerseits verseift sein können, Ionomere, Polyamide, Polycarbonate, fluorhaltige Polymere u.a.

Weiterhin können die thermoplastischen Kunststoffe anorganische oder organische Additive enthalten, die sich auf ihre Eigenschaften wie z.B. die Haft-und Gleitreibung und die Abriebfestigkeit, insbesondere auch im Hinblick auf die angestrebte Trennwirkung der Trennfolie, positiv auswirken.

Beispiele für derartige Additive sind Pigmente wie CaCO$_3$, SiO$_2$, TiO$_2$, Kaolin u.a., Fettsäureester, Polysiloxane, Nukleierungsmittel wie Alkali-oder Erdalkalisalze von Esterwachsen bzw. teilverseiften Produkten derselben, Benzoaten, Stearaten u.a.

Die Schicht aus den beschriebenen thermoplastischen Kunststoffen kann auf verschiedene Art und Weise mit der Schicht aus Papier zu der erfindungsgemäßen Verbundkombination zusammengefügt werden. Bevorzugt wird zunächst aus einem thermoplastischen Kunststoff nach dem Extrusionsverfahren eine Folie hergestellt, bevorzugt eine biaxial streckorientierte und, zum Zwecke der Dimensionsstabilisierung, hitzefixierte Folie.

Wenn als thermoplastischer Kunststoff Polyolefin, insbesondere Polypropylen, eingesetzt wird, besitzt die Folie eine Dicke im Bereich von 8 bis 50 μm, bevorzugt von 12 bis 20 μm. Wenn als thermoplastischer Kunststoff Polyester, insbesondere Polyethylenterephthalat eingesetzt wird, besitzt die Folie eine Dicke im Bereich von 8 bis 23 μm, bevorzugt von 10 bis 15 μm.

Zur Herstellung der erfindungsgemäßen Verbundkombination können die Folien in einer ersten Verfahrensvariante mit einem Kleber beschichtet werden und über Rollen mit der Schicht aus Papier zusammengeführt werden. In diesem Fall entsteht die festhaftende Verbindung der beiden Schichten nach dem Trocknen der als Kleber eingesetzten Beschichtung. Als Kleber können prinzipiell die üblichen Haftkleber auf Acrylatbasis eingesetzt werden, als geeigneter haben sich aber hochtemperaturbeständige Zweikomponentenkleber erwiesen.

Nach einem anderen Verfahren kann die Folie aus Kunststoff oder die Papierschicht mit einem Heißschmelzkleber beschichtet werden, und die beiden zu verbindenden Schichten können ebenfalls über Rollen zusammengeführt werden. In diesem Fall entsteht die festhaftende Verbindung der beiden Schichten nach dem Abkühlen des Heißschmelzklebers. Unter Heißschmelzkleber sind im allgemeinen Harze zu verstehen, die auch unter anderer Bezeichnung als "Hot Melt" bekannt sind.

Üblicherweise bestehen derartige Heißschmelzkleber aus einer Kombination von Ethylenvinylacetatcopolymeren mit einem niedrigmolekularen Harz oder Wachs. Das Ethylenvinylacetatcopolymere verleiht dem Heißschmelzkleber Kohäsion und Bindekraft und bestimmt die Viskosität und Wärmebeständigkeit; das Harz fördert zusätzlich die Hafteigenschaften und bestimmt im wesentlichen die Farbe und den Geruch des Heißschmelzklebers; das Wachs stellt die am meisten kristalline Komponente des Heißschmelzklebers dar, durch die insbesondere auch der Erweichungspunkt bestimmt wird. Normalerweise wird ein oligomeres Ethylen in Kombination mit Ethylenvinylacetatcopolymeren eingesetzt.

Andere Heißschmelzkleber bestehen aus verzweigtem niedermolekularem Polyethylen und anderen Harzen, u.a. auch ataktischem Polypropylen. Es sind auch weitere Heißschmelzkleber aus thermoplastischen Blockcopolymeren bekannt, die mehr oder minder gummiartige Eigenschaften aufweisen. Andere Heißschmelzkleber auf Basis von Polyamiden oder Polyestern können ebenfalls eingesetzt werden. Die Eigenschaften und Zusammensetzungen von Heißschmelzklebern sind z.B. beschrieben von T. Quinn in "The 1984 Packaging Encyclopedia", Seiten 54 und 55.

Der Heißschmelzkleber wird normalerweise in flüssigem Zustand bei erhöhten Temperaturen aufgebracht. Die Temperaturen liegen üblicherweise im Bereich von 70 bis 200°C, je nach Art des verwendeten Heißschmelzklebers. Der Heißschmelzkleber entwickelt seine maximale Haftfähigkeit bei Temperaturen unterhalb von 50°C. Die Zeit zur Ausbildung der maximalen Haftfähigkeit liegt bei entsprechender Abkühlung im Bereich von 0,5 bis 50 s. Vorrichtungen zum Auftragen des Heißschmelzklebers sind z.B. beschrieben von C. Scholl in "The 1984 Packaging Encyclopedia", Seiten 209 bis 211.

Als eine weitere Verfahrensvariante zum festhaftenden Zusammenfügen der Folie aus thermoplastischem Kunststoff und der Schicht aus Papier zu der erfindungsgemäßen Verbundkombination kann vorgesehen sein, beim Zusammenführen der Schichten über Rollen in den Spalt, der durch das Zusammenführen der beiden Schichten gebildet wird, ein niedrig schmelzendes thermoplastisches Polymeres, insbesondere Polyethylen, zwischenzuextrudieren. Hierzu wird das Polyethylen in einem Extruder plastifiziert und durch eine Schlitzdüse in den besagten Spalt gepreßt.

Die Folien aus den thermoplastischen Kunststoffen sind bevorzugt vor dem Zusammenfügen zu der erfindungsgemäßen Verbundkombination auf der der ersten Schicht aus Papier zugewendeten Seite zur Verbesserung der Haftung einer Coronabehandlung unterzogen. Dabei muß selbstverständlich besonders darauf geachtet werden, daß jegliche Rückseitenbehandlung ausgeschlossen wird, da sonst die Trennwirkung der erfindungsgemäßen Trennfolie an den Stellen der Rückseitenbehandlung verlorengeht.

Die Coronabehandlung, die auch unter der Bezeichnung 'Funkensprühentladung' bekannt ist, wird vorzugsweise in einer dafür geeigneten Elektrodenvorrichtung bei einer Spannung von 10 000 Volt und einer Frequenz von 10 000 Hz vorgenommen. Es kann alternativ dazu auch eine Flammenkorona vorgesehen sein.

Nach einer vierten Verfahrensvariante zum festhaftenden Zusammenfügen der zweiten Schicht aus thermoplastischem Kunststoff und der ersten Schicht aus Papier zur Herstellung der Verbundkombination, welche die erfindungsgemäße Trennfolie bildet, kann ferner, insbesondere wenn als thermoplastischer Kunststoff Polypropylen eingesetzt wird, das thermoplastische Polymere direkt als Schmelze auf die erste Schicht aus Papier aufextrudiert werden. Bei diesem Verfahren entsteht die festhaftende Verbindung nach dem Erstarren der Polymerenschmelze.

Die Herstellung der Schichstoffplatten mit der erfindungsgemäßen Trennfolie geschieht wie eingangs bereits beschrieben in der üblichen Weise. Hierzu wird im einfachsten Fall eine Kernschicht, umfassend mehrere übereinander angeordnete Schichten aus faserhaltigem Material, welche mit einem hitzehärtbaren Kunstharz getränkt wurden, zusammen mit einer oberen oder einer oberen und einer unteren erfindungsgemäßen Trennfolie als Dekorschicht(en) als ein Schichtpaket unter Ausbildung des dekorativen Formteils in der Hitze bei 120 bis 180°C und einem Druck von etwa 70 bar verpreßt. Nach dem Aushärten des hitzehärtbaren Kunstharzes wird/werden die Trennfolie(n) von der ausgehärteten Schichtstoffplatte abgezogen.

Üblicherweise wird aber bei einem Preßvorgang nicht nur eine Schichtstoffplatte hergestellt, sondern gleich mehrere. Hierzu werden in eine geeignete Presse eine obere und eine untere zweischichtige Trennfolie eingelegt, und dazwischen befinden sich Schichtpakete aus mit hitzehartbarem Kunstharz getränkten faserhaltigen Materialien, die jeweils die dekorativen Schichstoffplatten bilden und die jeweils durch Trennfolien mit dreischichtigem Aufbau voneinander gentrennt sind.

Die für die häufigsten Anwendungszwecke übliche Breite der Schicktstoffplatten leigt im Bereich von 40 bis 220 cm, ihre Länge ist von Größe der Herstellvorrichtung abhängig und kann bis zu 3 m betragen.

Die erfindungsgemäße Trennfolie hat die Vortiele, daß als thermoplastische Kunststoffschicht eine wesentlich dünnere Kunststoffolie eingesetzt werden kann, da eine Eigensteifigkeit der Folie durch das Vorliegen der Verbundkombination nicht mehr erforderlich ist. Außberdem kann die erfindungsgemäße Trennfolie ohne weiteres maschinell auf die zur Herstellung der Schichtstoffplatte aufeinandergestapelten harzgetränkten Schichten aufgelegt werden, eine Faltenbildung ist hierbei überhaupt nicht mehr zu befürchten. Durch die Möglichkeit der maschinellen Auflegung werden zeitliche und personelle Einsparungen bei der Herstellung der dekorativen Schichtstoffplatten ermöglicht.

Durch die nachfolgende Zeichnung soll die Erfindung beispielhaft noch deutlicher beschrieben werden.

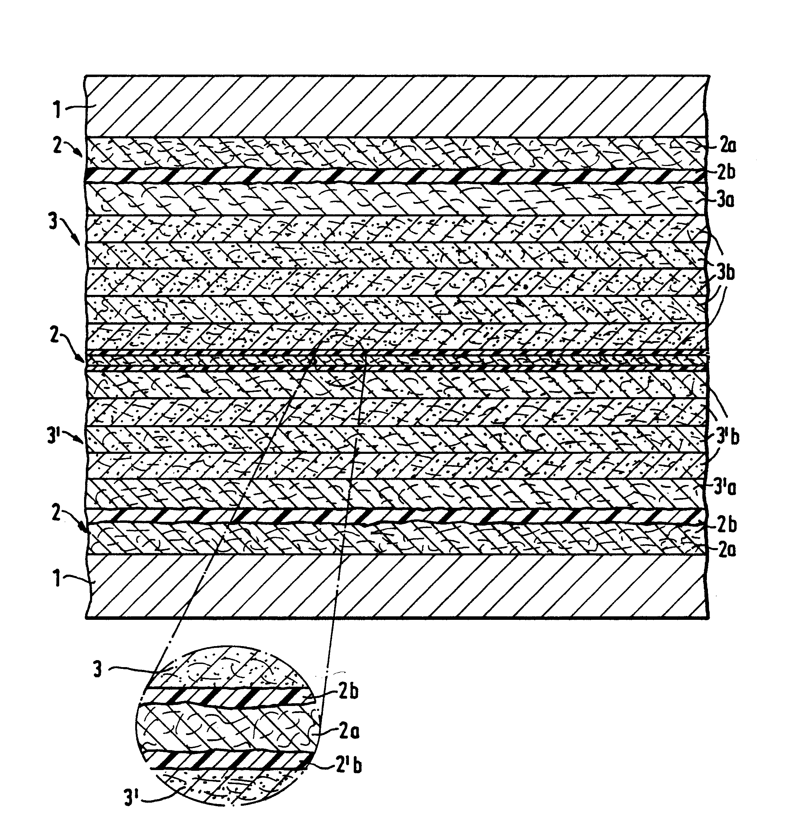

In der einzigen Zeichnung ist das Prinzip der Herstellung der dekorativen Schichtstoffplatten und damit der Einsatz der erfindungsgemäßen Trennfolie dargestellt. Durch Bezugszeichen sind im einzelnen Teile einer beheizbaren Presse 1/1' hervorgehoben, die bie Preßvorgang direkt mit der erfindungsgemäßen Trennfolie 2 in Verbindung steht. Die erfindungsgemäße Trennfolie 2 besteht aus einer ersten Schicht 2a aus Papier und einer zweiten Schicht 2b aus thermoplastischem Kunststoff. Die zweite Schicht der Trennfolie aus thermoplastischem Kunststoff 2b steht in unmittelbarem Kontakt zu dem die dekorative Schichtstoffplatte bildenden Schichtpaket 3 aus harzgetränkten faserigen Materialien. Üblicherweise besteht dieses Schichtpaket aus einer Außenschicht aus mit Melaminformaldehydharz getränktem bedrucktem Papier 3a und mehreren weiteren Schichten aus mit Phenolharz getränkten Papieren 3b. Auf der Unterseite jeweils eines Schichtpaketes schließt sich wieder Trennfolie 2 an, wobei zwischen den Schichtpaketen 3 und 3' Trennfolien mit dreischichtigem Aufbau 2a,2b,2b' vorgesehen sind, die ihre Trennwirkung nach beiden Seiten gegenüber den Schichtpaketen 3,3' ausüben. Auf der Unterseite des gesamten Aufbaues aus Schichtpaketen ist wieder (symmetrisch zur Oberseite) eine zweischichtige Trennfolie 2 mit den Schichten 2a und 2b angeordnet, an die sich die Gegenseite der Presse 1 anschließt.

**Ansprüche**

1. Mehrschichtige Trennfolie zur Herstellung der Oberflächenstrukturierung von dekorativen Schichtstoffplatten, dadurch gekennzeichnet, daß sie eine Verbundkombination darstellt, umfassend eine erste Schicht aus Papier und wenigstens eine zweite Schicht aus thermoplastischem Kunststoff, die einseitig ganzflächig mit der ersten Schicht festhaftend verbunden ist.

2. Trennfolie nach Anspruch 1, dadurch gekennzeichnet, daß sie eine Verbundkombination mit dreischichtigem Aufbau darstellt, umfassend eine erste Schicht aus Papier und zwei weitere Schichten aus thermoplastischem Kunststoff, wobei die zwei weiteren Schichten ganzflächig auf beiden Seiten der ersten Schicht aus Papier angeordnet und festaftend mit dieser verbunden sind.

3. Trennfolie nach Anspruch 1 oder 2, dadurch gekennzeichnet, daß die erste Schicht aus Papier mit hoher Steifigkeit und einem Flächengewicht im Bereich von 40 bis 120 g/m², bevorzugt von 60 bis 100 g/m², besteht.

4. Trennfolie nach einem der Ansprüche 1 bis 3, dadurch gekennzeichnet, daß die erste Schicht aus Papier auf ihrer Oberfläche Profilierungen aufweist und daß die Schicht(en) aus thermoplastischem Kunststoff die erste Schicht aus Papier auf der Seite/den Seiten mit den Profilierungen ganzflächig überzieht/überziehen.

5. Trennfolie nach einem der Ansprüche 1 bis 4, dadurch gekennzeichnet, daß die Schicht(en) aus thermoplastischem Kunststoff Polypropylenfolie(n) mit einer Dicke im Bereich von 8 bis 50 μm, bevorzugt von 12 bis 20 μm. ist/sind.

6. Trennfolie nach einem der Ansprüche 1 bis 4, dadurch gekennzeichnet, daß die Schicht(en) aus thermoplastischem Kunststoff Polyethylenterephthalatfolie(n) mit einer Dicke im Bereich von 8 bis 23 μm, bevorzugt von 10 bis 15 μm, ist/sind.

7. Trennfolie nach einem der Ansprüche 1 bis 6, dadurch gekennzeichnet, daß zwischen der ersten Schicht aus Papier und der/den Schicht(en) aus thermoplastischem Kunststoff ein Kleber angeordnet ist, bevorzugt ein hochtemperaturbeständiger Zweikomponentenkleber.

8. Trennfolie nach einem der Ansprüche 1 bis 6, dadurch gekenzeichnet, daß zwischen der ersten Schicht aus Papier und der/den Schicht(en) aus thermoplastischem Kunststoff ein Heißschmelzkleber angeordnet ist.

9. Trennfolie nach einem der Ansprüche 1 bis 6, dadurch gekennzeichnet, daß zwischen der ersten Schicht aus Papier und der/den Schicht(en) aus thermoplastischem Kunstoff zwischenextrudierte Schicht(en) aus Polyethylen angeordnet ist/sind/

10. Trennfolie nach einem der Ansprüche 1 bis 9, da durch gekennzeichnet, daß die Schicht(en) aus thermoplastischem Kunststoff biaxial streckorientierte und hitzefixierte Folie(n) ist/sind und daß die Folie(n) auf einer Seite coronabehandelt ist/sind.

11. Trennfolie nach einem der Ansprüche 1 bis 6, dadurch gekennzeichnet, daß die Schicht(en) aus thermoplastischem Kunststoff auf die erste Schicht aus Papier in schmelzflüssigem Zustand aufextrudiert ist/sind.

1
2 — 2a
2b
3a
3
3b
2
3'
3'b
3'a
2
2b
2a
1

3
2b
2a
2'b
3'

HOECHST AKTIENGESELLSCHAFT
85/K 060